(19) Europäisches Patentamt / European Patent Office / Office européen des brevets

(11) **EP 2 728 821 B1**

(12) **FASCICULE DE BREVET EUROPEEN**

(45) Date de publication et mention
de la délivrance du brevet:
**18.07.2018 Bulletin 2018/29**

(21) Numéro de dépôt: **13190791.7**

(22) Date de dépôt: **30.10.2013**

(51) Int Cl.:
$H04L\ 25/03^{(2006.01)}$      $H04L\ 27/20^{(2006.01)}$
$H04L\ 27/22^{(2006.01)}$      $H04B\ 5/00^{(2006.01)}$

(54) **Méthode et dispositif d'égalisation pour canal de transmission non-linéaire**

Verfahren und Vorrichtung zur Entzerrung eines nicht-linearen Übertragungskanals

Method and apparatus for equalization of a non-linear transmission channel

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **02.11.2012 FR 1260459**

(43) Date de publication de la demande:
**07.05.2014 Bulletin 2014/19**

(73) Titulaire: **Commissariat à l'Énergie Atomique
et aux Énergies Alternatives
75015 Paris (FR)**

(72) Inventeurs:
• **Dore, Jean-Baptiste
38950 SAINT MARTIN LE VINOUX (FR)**
• **Pebay-Peyroula, Florian
38250 SAINT-NIZIER-DU-MOUCHEROTTE (FR)**

(74) Mandataire: **Augarde, Eric et al
Brevalex
56 Boulevard de l'Embouchure,
Bât. B
B.P. 27519
31075 Toulouse Cedex 2 (FR)**

(56) Documents cités:
**WO-A2-2008/055207**

**Description**

## DOMAINE TECHNIQUE

La présente invention concerne de manière générale le domaine de l'égalisation et s'applique plus particulièrement aux systèmes de communication en champ proche, tels que les systèmes RFID (*Radio Frequency Identification*) ou les systèmes NFC (*Near Field Communication*).

## ÉTAT DE LA TECHNIQUE ANTÉRIEURE

Les systèmes de communication en champ proche (RFID, NFC) sont très largement répandus dans le grand public.

Initialement destinés à transférer de faibles quantités de données, ces systèmes requièrent désormais pour certaines nouvelles applications (transfert de fichiers biométriques stockés dans les passeports électroniques, transfert de fichiers d'image stockés dans les dossiers médicaux, etc.) de pouvoir transmettre une quantité importante d'informations dans des temps très brefs.

Aussi, a-t-il été proposé dans le cadre de la norme ISO 14443 relative aux cartes d'identification sans contact, une évolution des caractéristiques de la couche physique permettant de supporter de très hauts débits (jusqu'à 27.12 Mbits/s). Plus généralement, la norme ISO 14443 définit les caractéristiques auxquelles doit se conformer une communication bidirectionnelle entre un lecteur sans contact, encore dénommé PCD (*Proximity Coupling Device*) et un transpondeur passif ou PICC (*Passive Inductive Coupled Card*).

Sur la voie montante, le transpondeur passif transmet les informations en modulant la phase d'une porteuse de fréquence $F_{sc}$, la modulation de phase étant réalisée en connectant et déconnectant simplement l'antenne à une charge. Les bits à transmettre font l'objet d'une modulation BPSK (*Binary Phase Shift Keying*), les symboles BPSK modulant la porteuse à une fréquence de modulation $F_s = F_{sc}/n$.

Réciproquement, sur la voie descendante, il est prévu dans la norme en question, que le lecteur sans contact, puisse transmettre à haut débit (6.8 Mbits/s à 27.12 Mbits/s) à l'aide d'une modulation $M$-PSK. Plus précisément, les bits sont convertis en des symboles d'un alphabet de modulation $M$-PSK, chaque symbole étant transmis pendant un temps symbole $T_s = 1/F_s$. Le degré de modulation, c'est-à-dire le cardinal de l'alphabet de modulation, ainsi que le temps symbole donnent le bit rate.

Actuellement, le degré de modulation $M$ est fixé à 2, un bit égal à 0 étant transmis avec une phase $-\Phi/2$ et un bit égal à 1 avec une phase $\Phi/2$. La valeur de $\Phi$ est choisie relativement faible pour minimiser les discontinuités du signal, par exemple $\Phi=\pi/8$.

Le signal transmis par le lecteur peut s'exprimer sous la forme :

$$s(t) = A\cos\left(2\pi F_c + m(t) + \varphi_0\right) \qquad (1)$$

où $A$, $F_c$ et $\varphi_0$, sont respectivement l'amplitude, la fréquence et la phase à l'origine de la porteuse et où $m(t)$ est le terme de modulation de phase donné par :

$$m(t) = \sum_k \Phi_k g(t - kT_s) \qquad (2)$$

où $\Phi_k$ est la phase du kième symbole PSK et $g(t)$ est une fonction de mise en forme par exemple la fonction créneau définie par :

$$g(t) = 1 \text{ si } 0 \leq t < T_s$$

$$g(t) = 0 \text{ sinon} \qquad (3)$$

Au niveau du PICC, le signal reçu est translaté en bande de base, échantillonné avec une fréquence $F_s$ et les échantillons obtenus, $r_k$, peuvent s'exprimer sous la forme :

$$r_k = a_k e^{j\Phi_k} \qquad (4)$$

où $a_k$ est l'amplitude (réel positif) de l'échantillon et $\Phi_k$ sa phase. On suppose une synchronisation parfaite de l'échantillonnage par rapport aux symboles reçus.

Les échantillons ainsi obtenus font ensuite l'objet d'une démodulation différentielle de phase. De manière équivalente, la démodulation différentielle de phase peut être réalisée en analogique et le résultat échantillonné et converti en numérique. Dans tous les cas, le démodulateur différentiel fournit la différence de phase entre deux échantillons consécutifs du signal en bande de base :

$$y_k = \arg(r_k r_{k-1}^*) \qquad (5)$$

où arg($Z$) représente la phase du nombre complexe $Z$ et .* est la conjugaison de phase.

En absence d'interférence intersymbole et de bruit sur le canal de transmission, la phase $y_k$ en sortie du démodulateur différentiel n'est autre que :

$$y_k = \Phi_k - \Phi_{k-1} \qquad (6)$$

Ainsi, si l'on connaît la phase de départ on peut en déduire les phases $\Phi_k$ et donc les bits transmis.

Toutefois, en pratique, pour des débits de transmission élevés et par conséquent de faibles temps symbole $T_s$, le signal reçu est affecté par une interférence intersymbole.

Le signal reçu est le résultat de la convolution du signal transmis par la réponse impulsionnelle du canal et les échantillons $r_k$ peuvent s'exprimer alors sous la forme :

$$r_k = \sum_{p=0}^{L-1} h_p s_{k-p} \qquad (7)$$

où $L$ est l'étalement du canal exprimé en temps symbole et $s_{k-p}$ est l'échantillon du signal émis au temps $(k-p)T_s$, ramené en bande de base.

La sortie du démodulateur différentiel s'exprime alors sous la forme :

$$y_k = \arg(\sum_{p=0}^{L-1} \sum_{q=0}^{L-1} h_p h_q s_{k-p} s_{k-q-1}^*) \qquad (8)$$

On comprend que la sortie du démodulateur n'est donc pas linéaire et que par conséquent certaines techniques d'égalisation classiques, telles que l'égalisation ZF (*Zero Forcing*) ou l'égalisation MMSE (*Minimum Mean* Square) ne trouvent pas à s'appliquer.

Il est donc nécessaire de prévoir une technique d'égalisation compatible avec caractère non linéaire du canal de transmission (pris ici au sens étendu, c'est-à-dire incluant le démodulateur différentiel) et avec l'alphabet de modulation (PSK).

Il a été proposé dans l'article de B. Yu et al. intitulé « The application of the CMA blind equalization in UHF RFID systems », publié dans Proc. of IET Conf. On Wireless, Mobile ans Sensor Networks, Dec. 2007, pp 326-329, de recourir à une égalisation adaptative aveugle de type CMA (*Constant Modulus Algorithm*), bien adaptée à la modulation PSK. Toutefois, cette méthode d'égalisation nécessite des calculs complexes (inversion de pseudo-matrice) et par conséquent des ressources importantes qui ne sont guère envisageables dans un PICC.

Le but de la présente invention est de proposer une méthode d'égalisation sur un canal de transmission non linéaire, tel que celui envisagé plus haut, qui ne nécessite pas de ressources de calcul importantes. Un but subsidiaire de la présente invention est de proposer une méthode d'égalisation pour un tel canal qui soit bien adaptée à une démodulation différentielle de symboles PSK. La publication numéro WO 2008/055207 A2 (Qualcomm) décrit une méthode de décodage au sens du maximum de vraisemblance d'une sequence de symboles PSK transmis par un terminal et reçus par un satellite. Afin de tenir compte de la puissance limitée du terminal, il est propose d'effectuer un décodage de Viterbi aide par les données: plus précisément l'estimation de canal est initiée par des symboles pilotes puis les symboles décodes a chaque étape du trellis sont utilises pour mettre a jour cette estimation.

## EXPOSÉ DE L'INVENTION

La présente invention est définie comme une méthode d'égalisation de symboles de modulation transmis par un émetteur sur un canal de transmission à un récepteur, le récepteur fournissant des observables dépendant chacun non linéairement d'un nombre prédéterminé $L$ de symboles de modulation consécutifs, ladite méthode déterminant à partir d'une séquence d'observables la séquence de symboles de modulation la plus vraisemblable au moyen d'un algorithme de Viterbi opérant sur un treillis à $N$ états, chaque état représentant un état du canal de transmission, chaque branche entre deux états consécutifs du treillis étant associée à un symbole de modulation. Selon cette méthode :

- on reçoit, dans une étape d'initialisation, une séquence pilote de symboles de modulation, ladite séquence pilote se traduisant par un chemin passant par toutes les branches autorisées du treillis, et l'on mémorise pour chacune de ces branches l'observable correspondant ;
- on reçoit une séquence de symboles de modulation à égaliser et l'on détermine la séquence de symboles de modulation la plus vraisemblable comme celle correspondant au chemin de plus faible métrique dans le treillis, une métrique d'un chemin étant calculée comme la somme des métriques des branches qui le constituent et une métrique de branche étant calculée comme une distance entre l'observable fourni pour le symbole de modulation à égaliser et l'observable mémorisé pour ladite branche.

Avantageusement, la séquence pilote de symboles de modulation se traduit par un chemin passant une fois et une fois seulement par chaque branche autorisée du treillis.

Selon une variante, les symboles de modulation sont des symboles PSK se succédant à une fréquence symbole ($f_s$) et les observables sont obtenus comme le produit hermitien d'échantillons consécutifs du signal reçu en bande de base, l'échantillonnage étant effectué à la fréquence symbole.

Les symboles de modulation PSK peuvent être de la forme $e^{j\Phi_\mu}$ avec $\Phi_\mu = \mu \dfrac{\Phi}{2^m}$ où $\mu$ est un entier relatif non nul tel que $-2^{m-1} \leq \mu \leq 2^{m-1}$ où $M = 2^m$ est le degré de modulation des symboles PSK.

Dans un exemple de réalisation, $m=1$ et l'étalement temporel du canal de transmission est de $L^*T_s$ où $L^*$ est un entier supérieur ou égal à 1, et le treillis comporte $2^L-1$ états avec $2^{L+1}-1$ branches autorisées, où $L = L^*+1$.

La présente invention concerne également le récepteur d'un signal transmis par un émetteur sur un canal de transmission, le signal étant modulé par des symboles de modulation à une fréquence symbole ($f_s$), le récepteur comportant :

un démodulateur fournissant des observables ($y_k$) à la fréquence symbole, chaque observable dépendant chacun non linéairement d'un nombre prédéterminé $L$ de symboles de modulation consécutifs ;

un égaliseur de Viterbi opérant sur un treillis à $N$ états, chaque état représentant un état du canal de transmission, chaque branche entre deux états consécutifs du treillis étant associée à un symbole de modulation, ledit égaliseur comprenant un module de calcul de métrique de branche recevant lesdits observables, un module de calcul de métrique et de sélection de chemin à partir desdites métriques de branche, et un module de cheminement arrière dans le treillis pour déterminer un chemin survivant, le récepteur étant caractérisé en ce qu'il comprend en outre :
un module d'apprentissage adapté à identifier une séquence pilote de symboles de modulation, ladite séquence pilote se traduisant par un chemin passant par toutes les branches autorisées du treillis, à stocker dans une mémoire, pour chacune de ces branches, l'observable correspondant ;
le module de calcul de métrique de branche calculant la métrique d'une branche comme une distance entre l'observable fourni par le démodulateur et l'observable mémorisé pour ladite branche.

Avantageusement, la séquence pilote de symboles de modulation se traduit par un chemin passant une fois et une fois seulement par chaque branche autorisée du treillis.

Selon une variante, les symboles de modulation sont des symboles PSK et le démodulateur est un démodulateur de phase différentiel effectuant le produit hermitien d'échantillons consécutifs du signal reçu en bande de base, l'échantillonnage étant effectué à la fréquence symbole.

Les symboles de modulation PSK peuvent être de la forme $e^{j\Phi_\mu}$ avec $\Phi_\mu = \mu \dfrac{\Phi}{2^m}$ où $\mu$ est un entier relatif non nul tel que $-2^{m-1} \leq \mu \leq 2^{m-1}$ où $M = 2^m$ est le degré de modulation des symboles PSK.

Selon un exemple de réalisation, $m=1$ et l'étalement temporel du canal de transmission est de $L^*T_s$ où $L^*$ est un entier supérieur ou égal à 1, et le treillis comporte $2^L-1$ états avec $2^{L+1}-1$ branches autorisées, où $L=L^*+1$.

## BRÈVE DESCRIPTION DES DESSINS

La Fig. 1 représente de manière schématique une méthode d'égalisation selon un mode de réalisation de l'invention ;

La Fig. 2 représente de manière schématique un récepteur selon un mode de réalisation de l'invention ;

La Fig. 3A représente un diagramme d'états pour une modulation 2-PSK et un canal parfait ;

La Fig. 3B représente un treillis correspondant au diagramme d'états de la Fig. 3A ;

La Fig. 4A représente un diagramme d'états pour une modulation 2-PSK et un canal présentant un étalement temporel ;

La Fig. 4B représente un treillis correspondant au diagramme d'états de la Fig. 4A ;

La Fig. 5A représente le cheminement au sein du diagramme d'états de la Fig. 4A, correspondant à la transmission d'une séquence pilote ;

La Fig. 5B représente le cheminement au sein du treillis de la Fig. 4B, correspondant à la transmission de la même séquence pilote.

## EXPOSÉ DÉTAILLÉ DE MODES DE RÉALISATION PARTICULIERS

Nous considérerons dans la suite un canal de transmission sur lequel un émetteur transmet des symboles de modulation appartenant à un alphabet prédéterminé. Plus précisément, les symboles de modulation modulent une porteuse et le signal ainsi modulé est transmis sur le canal de transmission.

Les symboles de modulation sont obtenus à partir de symboles d'information (par exemple des mots binaire de $m$ bits) au moyen d'une modulation $M$-aire à symbole. Dans un premier temps, il ne sera fait aucune hypothèse sur le type de modulation utilisé.

Le récepteur comprend un démodulateur fournissant des observables à partir du signal reçu. Chaque observable dépend non linéairement d'un nombre prédéterminé $L$ de symboles de modulation transmis sur le canal. Si les symboles de modulation sont transmis avec la périodicité d'un temps symbole $T_s=1/F_s$, on comprendra que $L$ n'est autre que l'étalement temporel du canal, exprimé en nombre de temps symbole.

On suppose dans la suite que le canal de transmission est de type AWGN (Additive White Gaussian Noise). Dans ce cas, l'observable fourni par le démodulateur au temps $k$ peut s'exprimer sous la forme :

$$y_k = f_{NL}\left(x_k,...,x_{k-L-1},h\right) + n_k \qquad (9)$$

où $f_{NL}$ est une fonction non linéaire, $h$ est la réponse impulsionnelle du canal de transmission, $x_k,...,x_{k-L-1}$ sont les $L$ derniers symboles de modulation transmis sur le canal et $n_k$ est un échantillon de bruit blanc gaussien (on rappelle que

$$y_k = \sum_{p=0}^{L-1} h_p x_{k-p} + n_k).$$

pour un canal de transmission linéaire on aurait simplement

Sous l'hypothèse AWGN du canal, la probabilité d'observer $y_k$ sachant que les symboles $x_k,..., x_{k-L-1}$ ont été émis s'exprime comme :

$$p\left(y_k \mid x_k,...,x_{k-L-1},h\right) = \frac{1}{\sigma\sqrt{2\pi}}\exp\left(-\frac{\left(y_k - f_{NL}\left(x_k,...,x_{k-L-1},h\right)\right)^2}{2\sigma^2}\right) \qquad (10)$$

Si l'on suppose que les échantillons de bruit sont des variables indépendantes et identiquement distribuées, la probabilité d'observer une séquence d'observables $y_1,...,y_K$ sachant que la séquence de symboles $x_1,...,x_K$ a été transmise n'est autre que :

$$p\left(y_1,...,y_K \mid x_1,...,x_K\right) = \prod_{k=1}^{K} p(y_k \mid x_1,...,x_K) \qquad (11)$$

La vraisemblance de la séquence $x_1,...,x_K$ compte tenu des observables $y_1,..., y_K$ est $p(y_1,...,y_K|x_1,...,x_K)$. Le

maximum de vraisemblance peut donc être recherché comme la séquence $\hat{x}_1,...,\hat{x}_K$ telle que :

$$\hat{x}_1,...,\hat{x}_K = \underset{x_1...x_K}{\arg\max}\left( \prod_{k=1}^{K} p(y_k|x_1,...,x_K) \right) \qquad (12)$$

soit de manière équivalente, la fonction logarithme étant une fonction croissante :

$$\hat{x}_1,...,\hat{x}_K = \underset{x_1...x_K}{\arg\max}\left( \sum_{k=1}^{K} \log p(y_k|x_1,...,x_K) \right) \qquad (13)$$

soit encore, compte tenu de (10) :

$$\hat{x}_1,...,\hat{x}_K = \underset{x_1...x_K}{\arg\min}\left( \sum_{k=1}^{K}\left( y_k - f_{NL}(x_k,...,x_{k-L-1},h) \right)^2 \right) \qquad (14)$$

La séquence $\hat{x}_1,...,\hat{x}_K$ satisfaisant au critère de maximum de vraisemblance peut être obtenue, de manière connue en soi, au moyen de l'algorithme de Viterbi opérant sur un treillis à $M^{L-1}$ états où $M$ est le degré de modulation (c'est-à-dire le cardinal de l'alphabet de modulation). On rappelle que l'algorithme de Viterbi repose sur une modélisation du système observé (ici de l'ensemble constitué par le modulateur, le canal de transmission et le démodulateur) sous forme d'une machine d'états finis. Il consiste à rechercher au sein du treillis constitué par les transitions possibles entre états successifs, le chemin le plus probable. Dans le cas d'une métrique basée sur une distance euclidienne, il s'agit du chemin de plus faible métrique, la métrique d'un chemin étant calculée comme la somme des métriques des branches composant ce chemin. La métrique d'une branche est ici obtenue à partir de la distance, par exemple une distance euclidienne, entre l'observable $y_k$ et un observable stocké en mémoire correspondant à ladite branche, comme expliqué plus loin.

On rappelle que, lorsque le canal de transmission est linéaire, il suffit généralement d'estimer la réponse impulsionnelle du canal, c'est-à-dire les coefficients $h_p$, et de déduire la métrique de branche par $\left( y_k - \sum_{p=0}^{L-1} h_p x_{k-p} \right)^2$ où $x_{k-p}$, $p=1,...,L$-1, sont les symboles de modulation associés à l'état de départ de branche et où $x_k$ est le symbole de modulation associé à la transition entre l'état de départ et l'état d'arrivée de ladite branche.

Dans le cas non linéaire, la présente invention propose avantageusement une étape d'initialisation, dans laquelle l'émetteur transmet une séquence pilote de symboles de modulation, cette séquence pilote se traduisant par un chemin passant par toutes les branches possibles du treillis. De préférence, la séquence pilote est de longueur minimale au sens où elle se traduit par un chemin passant une fois, et une fois seulement, par chacune des branches possibles du treillis.

Le nombre de branches issues d'un état étant égal au cardinal de l'alphabet de modulation, soit $M$, et le nombre d'états étant lui même égal à $M^{L-1}$ la longueur minimale d'une séquence pilote est de $(L$-1$)+M^L$ symboles (les $L$-1 premiers symboles servant à l'initialisation du premier état).

Dans l'étape d'initialisation, on note $x_1^0,...,x_N^0$ la séquence pilote et $y_1^0,...,y_N^0$ les observables correspondants. Pour chaque branche, c'est-à-dire pour chaque transition entre un état de départ et un état d'arrivée, on stocke en mémoire la valeur prise par l'observable correspondant. Par exemple, si l'état de départ est donné par $x_{n-1}^0,...,x_{n-L-1}^0$ et que la branche $b_i$ correspond à l'entrée $x_n^0$, autrement dit aboutit à l'état d'arrivée défini par $x_n^0,...,x_{n-L}^0$, la valeur de l'observable stockée en mémoire pour cette branche est :

$$y_n^0 = f_{NL}\left( x_n^0, ..., x_{n-L-1}^0, h \right) \qquad (15)$$

Ultérieurement, lors de la phase d'égalisation à proprement parler, lorsque l'on reçoit un observable $y_k$ alors que l'on est dans le même état de départ $x_n^0, ..., x_{n+L-1}^0$, la métrique $d_i$ de la branche associée à cette même entrée $x_{n+L}^0$, est déterminée par :

$$d_i = \left( y_k - y_{n(i)}^0 \right)^2 \qquad (16)$$

où les banches ont été indexées par $i=1,..., M^L$ et où $y_{n(i)}^0$ est la valeur stockée pour la branche $i$ lors de l'étape d'initialisation.

La séquence de symboles la plus vraisemblable est estimée à partir de l'algorithme de Viterbi en utilisant les métriques de branche (16) comme expliqué plus loin.

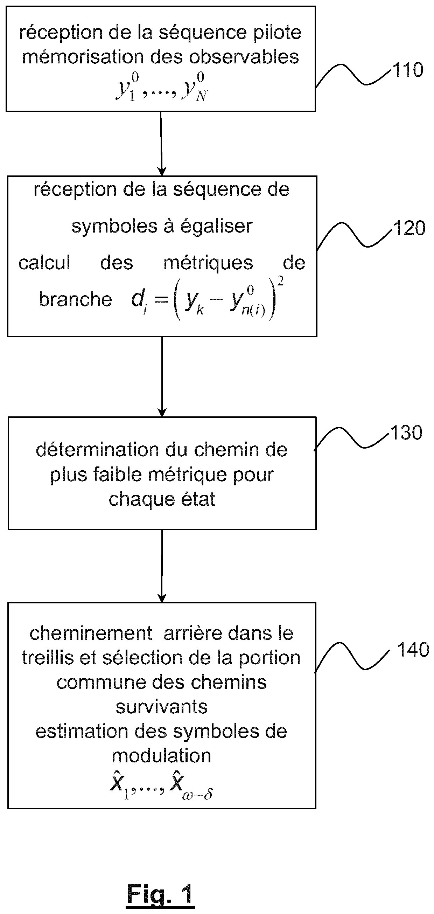

La Fig. 1 représente de manière schématique une méthode d'égalisation selon un mode de réalisation de l'invention.

A l'étape 110, on reçoit une séquence pilote de symboles de modulation, $x_1^0, ..., x_Q^0$, correspondant à un chemin à travers toutes les branches du treillis, c'est-à-dire par chaque reliant deux états successifs. Le démodulateur fournit en réponse une séquence d'observables $y_1^0, ..., y_{Q-1}^0$, chaque observable $y_n^0$, $n=1,...,Q-1$, correspondant à une branche, c'est-à-dire à une transition entre un état de départ défini par $x_{n-1}^0, ..., x_{n-L-1}^0$ et un état d'arrivée défini par $x_n^0, ..., x_{n-L}^0$. Pour chacun des observables $y_n^0$, $n=1,...,Q-1$, on stocke en mémoire la valeur de l'observable en relation avec la branche correspondante.

Cette étape d'initialisation peut être effectuée une fois pour toutes ou à intervalles réguliers. De préférence elle est effectuée avec une périodicité inférieure au temps de cohérence du canal. Lorsque la transmission est réalisée par paquets, on peut prévoir que la séquence pilote soit transmise dans une entête de chaque paquet ou bien tous les $P$ paquets seulement.

Après réception d'une séquence de symboles de modulation $x_1,...,x_K$, on effectue une égalisation en utilisant l'algorithme de Viterbi, comme expliqué ci-dessous :

A l'étape 120, lors de la réception d'un nouveau symbole au temps $k$, le démodulateur fournit un observable $y_k$. Pour chaque état du treillis à l'instant $k$, et pour chaque branche $b_i$ issue de cet état, on calcule la métrique de branche comme une distance entre l'observable correspondant au symbole de modulation à égaliser et l'observable mémorisée à l'étape précédente pour ladite branche. Plus précisément, la métrique de branche pourra être calculée par: $d_i = \left( y_k - y_{n(i)}^0 \right)^2$

où $y_{n(i)}^0$ est la valeur de l'observable stockée en relation avec la branche $b_i$.

A l'étape 130, on détermine pour chaque état $j$ du treillis, le chemin de plus faible métrique aboutissant à cet état, la plus faible métrique étant donnée par :

$$L_j(k) = \min_{\pi(j)}\left( L_{\pi(j)}(k-1) + d_{\pi(j),j} \right) \qquad (17)$$

où l'on a noté $\pi(j)$ l'état prédécesseur de $j$ dans le treillis et où $d_{\pi(j),j}$ est la métrique de la branche reliant l'état $\pi(j)$ à l'état $j$. Les métriques des états sont initialisées (au temps $k=1$) à une valeur arbitraire positive ou nulle, par exemple $L_j(1)=0$, $\forall j$.

On obtient ainsi à chaque instant $k$ un seul chemin survivant aboutissant à l'état $j$.

L'étape 130 est effectuée à chaque temps symbole.

A bout d'un certain nombre de temps symbole, par exemple au temps $\omega$, on effectue une opération de cheminement arrière (*backtracing*) connue en soi.

Plus précisément, en 140, à partir d'un état quelconque $j(\omega)$, par exemple l'état présentant la plus faible métrique (de chemin), on remonte le chemin ayant abouti à cet état. On retient la portion de ce chemin antérieure au temps $\omega\text{-}\delta$ où $\delta$ est la durée de la fenêtre de convergence (exprimée en temps symbole). Le caractère arbitraire du choix de l'état d'arrivée provient du fait que tous les chemins survivants convergent au fur et à mesure que l'on progresse dans le treillis. En d'autres termes, tous les chemins survivants ont une portion commune dès lors que l'on remonte au delà d'une durée $\delta$ prédéterminée à partir du temps courant $\omega$.

La liste des branches correspondant à la portion de chemin ainsi retenue fournit les symboles de modulation $\hat{x}_1,...,\hat{x}_{\omega\text{-}\delta}$. Alternativement, l'étape 140 peut fournir directement les symboles d'information correspondants.

L'étape 140, est effectuée de manière glissante, par exemple avec une périodicité $\delta$ ou moindre.

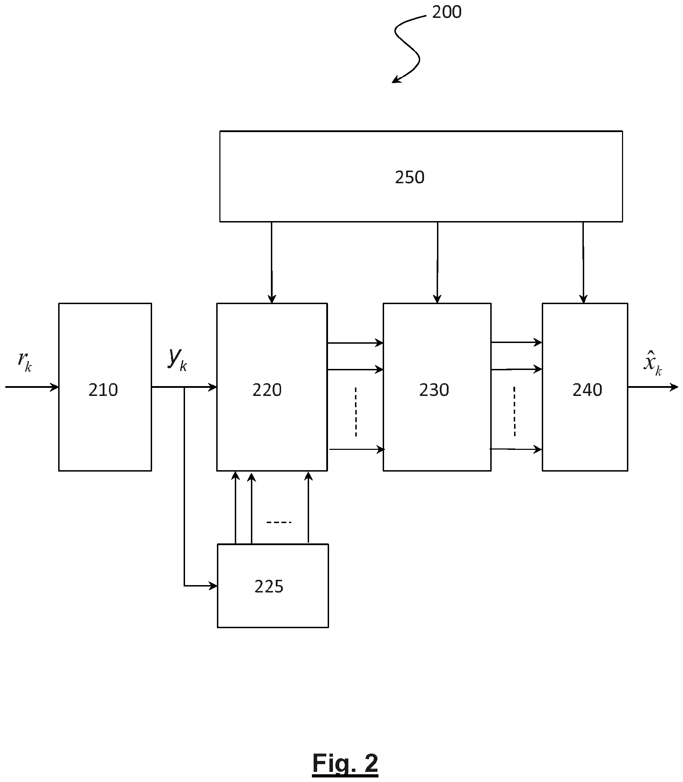

La Fig. 2 représente la structure d'un récepteur selon un mode de réalisation de l'invention.

Le récepteur 200 comprend un démodulateur 210 fournissant, à partir du signal reçu, des observables $y_k$ au rythme symbole $T_s$.

Les observables $y_k$ sont transmis à un module de calcul de métrique de branche 220 d'une part et un module d'apprentissage 225 d'autre part.

Le module d'apprentissage 225 repère, par exemple au moyen d'un entête de synchronisation le début d'une séquence pilote et, lors de la phase d'initialisation, stocke dans une mémoire locale les valeurs d'observables $\left( y^0_{n(i)} \right)$ respectivement associées à chacune des branches $b_i$ du treillis.

Le module de calcul de métrique de branche 220 calcule en chaque instant symbole k, à partir de l'observable $y_k$, la métrique de chaque branche $b_i$, $i = 1,..., M^L$ à partir de l'expression (16), les valeurs $y^0_{n(i)}$ étant récupérées dans la mémoire locale.

Le module 230, dénommé module ACS (*Add Compare Select*) dans la terminologie de l'algorithme de Viterbi, implémente l'étape 130. Autrement dit, à chaque temps symbole $k$ et pour chaque état $j$, il calcule, pour chaque prédécesseur $\pi(j)$ de l'état $j$, la somme de la métrique de cet état prédécesseur et de la métrique de branche allant de l'état $\pi(j)$ à l'état $j$. Il compare ensuite les sommes ainsi obtenues et sélectionne l'état prédécesseur (et donc la branche) réalisant la somme la plus faible. Cette somme donne la métrique de l'état $j$ au temps $k$.

Le module 240 effectue le cheminement arrière de l'étape 140, c'est-à-dire pour un temps symbole $\omega$ remonte le chemin aboutissant à un état arbitraire $j(\omega)$ et ne retient que la portion de ce chemin antérieure au temps $\omega\text{-}\delta$ comme expliqué plus haut. Les états successifs (ou les branches) de cette portion de chemin donne les symboles de modulation $\hat{x}_1,...,\hat{x}_{\omega\text{-}\delta}$.

Le module de commande 250 contrôle les modules 220, 230 et 240 pour cadencer le calcul des métriques de branche, les opérations ACS et le cheminement arrière.

Nous exposerons dans la suite un mode de réalisation particulier de l'invention dans le contexte d'un alphabet de modulation PSK et d'une démodulation différentielle, comme mentionné dans la partie introductive de la présente demande.

Dans un but de simplification et sans préjudice de généralisation, nous présenterons ce mode de réalisation dans le cas d'un alphabet de modulation 2-PSK et mentionnerons les résultats pour un alphabet de modulation de cardinal $M = 2^m$ quelconque à chaque fois que nécessaire.

Les symboles de modulation sont donnés par exemple par $e^{j\Phi/2}$ si le bit d'information est égal à 1 et $e^{-j\Phi/2}$ si le bit d'information est égal à 0. L'angle $\Phi$ pourra être choisi tel que $\Phi = \pi/8$.

De manière plus générale, si le cardinal de l'alphabet PSK est $M=2^m$, il est possible de mapper un mot de $m$ bits sur un symbole PSK de cet alphabet.

Du côté du récepteur, on suppose que l'on effectue une démodulation de phase comme expliqué en relation avec les expressions (5) et (6).

On supposera dans la suite que le canal de transmission (hors démodulateur différentiel) présente un étalement temporel de $L^*$ temps symbole. L'étalement temporel du canal incluant le démodulateur différentiel est alors de $LT_s$, $L=L^*+1$, puisque le démodulateur différentiel introduit de par sa fonction un décalage $T_s$ supplémentaire.

Dans le cas où le canal se limite à un seul trajet, c'est-à-dire si le canal de transmission est sans mémoire ($L^*=1$) on peut observer trois valeurs possibles d'incrément de phase en sortie du démodulateur, à savoir :

- $+\Phi$ si l'on a un bit 0 suivi d'un bit 1 (transition $0\rightarrow1$, représentée par $+1$) ;
- $-\Phi$ si l'on a un bit 1 suivi d'un bit 0 (transition $1\rightarrow0$ représentée par $-1$) ;
- $0$ si l'on a deux bits consécutifs de même valeur.

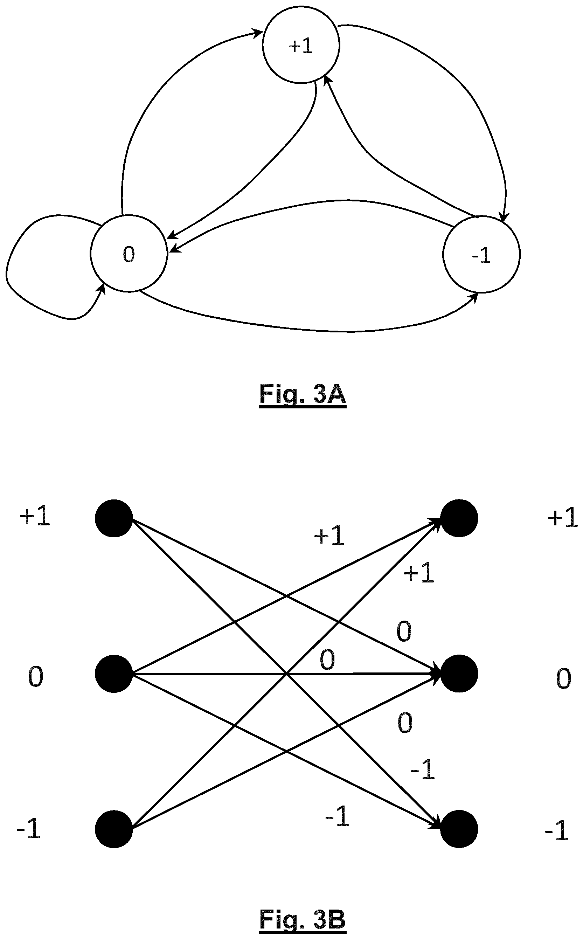

On a représenté en Fig. 3A le diagramme d'états correspondant et en Fig. 3B un treillis indiquant les transitions entre états.

On a noté +1,0 et -1 les trois états possibles du canal. On remarque que toutes les transitions ne sont pas autorisées dans ce diagramme, seul l'état 0 pouvant conduire à tous les autres états (3 branches sortantes dans le treillis) alors que les états -1,+1 ne peuvent conduire qu'à un état opposé ou à l'état 0 (2 branches sortantes dans le treillis). En effet, un incrément de phase +1 alors que l'état est +1 signifierait deux incréments successifs de $+\Phi$ et donc à une sortie de la constellation dans le sens trigonométrique. De manière similaire, un incrément de -1 alors que l'état est -1 signifierait deux incréments successifs de $-\Phi$ et donc une sortie de la constellation dans le sens trigonométrique inverse.

De manière générale, si les symboles PSK sont de la forme $e^{j\Phi_\mu}$ avec $\Phi_\mu = \mu\dfrac{\Phi}{2^m}$ où $\mu$ est un entier relatif non nul tel que $-2^{m-1}\leq\mu\leq2^{m-1}$, certaines transitions dans le diagramme d'états sont interdites. Plus précisément, pour un état représenté par la différence de phase $\nu\dfrac{\Phi}{2^{m-1}}$, où $\nu$ est un entier relatif tel que $-2^{m-1}\leq\nu\leq2^{m-1}$, $|\nu|$ transitions sont interdites.

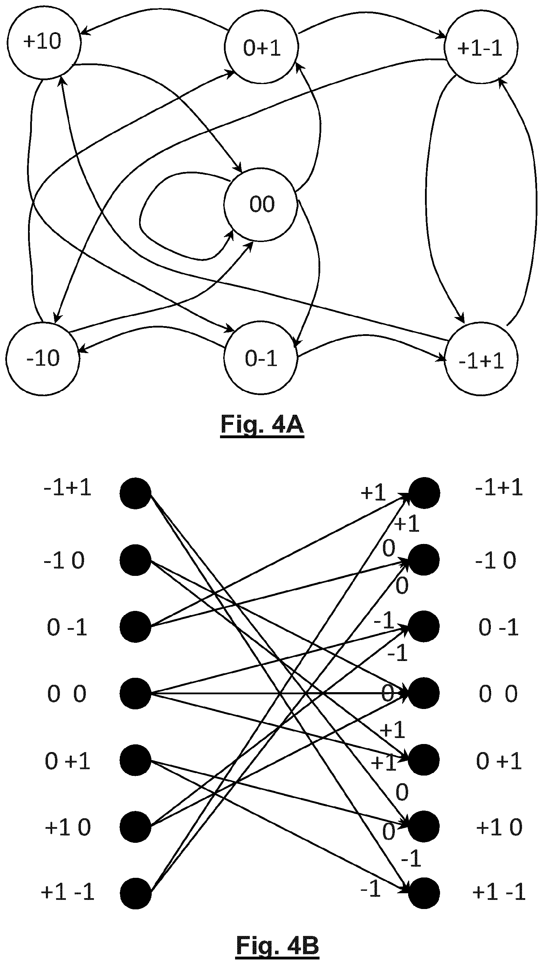

La Fig. 4A représente le diagramme d'états relatif à un canal présentant un étalement temporel égal à deux temps symbole ($L^*=2$).

Dans ce cas, la sortie du démodulateur différentiel peut être modélisé par une machine d'états à $L-1=2$ éléments mémoire, chaque élément mémoire pouvant contenir une valeur +1 (incrément de $+\Phi$), une valeur -1 (incrément de $-\Phi$) ou une valeur nulle. Le nombre d'états de cette machine est donc théoriquement de $3^{L-1}=9$. Toutefois, comme on l'a vu plus haut la séquence +1,+1 et la séquence -1,-1 sont interdites. Il en résulte que le nombre d'états à prendre en considération est seulement de 7, comme indiqué sur la Fig. 4A.

La Fig. 4B représente le treillis correspondant au diagramme d'états de la Fig. 4A. Les sept états sont représentés par les séquences -1,+1; -1,0; 0,-1; 0,0 ; 0,+1 ; +1,0 ; +1,-1. Seul l'état 00 peut conduire à 3 états (3 branches sortantes), les autres états ne pouvant conduire qu'à deux états. Le nombre total de branches est donc inférieur à celui d'un treillis complètement connecté, c'est-à-dire où un état pourrait conduire à n'importe quel état. On constate que le treillis ne comporte que 15 branches possibles (c'est à dire à des transitions autorisées) au lieu des 27 branches pour un treillis entièrement connecté (3 branches pour chacun des 9 états).

De manière générale, pour un canal à $L^*$ états, $L^*\geq1$, la sortie du démodulateur différentiel peut être modélisée comme une machine d'états finis ayant théoriquement $3^{L-1}$ états possibles dont en pratique seuls $2^L-1$ états sont autorisés, les autres étant interdits du fait de la structure de la constellation de modulation. Le nombre d'états autorisés correspond à la multiplicité de la séquence de symboles à prendre en compte pour définir la sortie du démodulateur. De même, parmi les $3^L$ branches d'un treillis entièrement connecté, seules $2^{L+1}-1$ branches sont effectivement autorisées dans le treillis (transitions autorisées de la machine d'états), les autres branches correspondant à des transitions interdites (sortie de la constellation dans le sens trigonométrique ou sens inverse du sens trigonométrique).

De manière encore plus générale, pour un alphabet de modulation PSK de cardinal $M$ tel que défini plus haut, le nombre total d'états autorisés reste toujours inférieur au nombre d'états théoriquement possibles, soit $(2M-1)^{L-1}$. Par exemple :

Pour $L^* = 2$, c'est-à-dire, $L=3$, on a :

- pour $M = 2$ : 9 états théoriquement possibles, 7 états autorisés ;
- pour $M = 4$ : 49 états théoriquement possibles, 7 états autorisés ;
- pour $M = 8$ : 225 états théoriquement possibles, 43 états autorisés ;
- pour $M = 16$ : 961 états théoriquement possibles, 91 états autorisés.

Pour $L^* = 3$, c'est-à-dire, $L = 4$, on a :

- pour $M = 2$ : 27 états théoriquement possibles, 15 états autorisés ;
- pour $M = 4$ : 343 états théoriquement possibles, 51 états autorisés ;
- pour $M = 8$ : 3375 états théoriquement possibles, 123 états autorisés ;
- pour $M = 16$ : 29791 états théoriquement possibles, 267 états autorisés.

On rappelle que la complexité de l'algorithme de Viterbi évolue de manière exponentielle avec l'étalement temporel du canal. On comprendra donc que ce mode de réalisation particulier est avantageux au sens où il permet de ne pas avoir à prendre en compte tous les états théoriquement possibles de la machine d'états mais certains d'entre eux seulement.

Comme indiqué en relation avec les Figs. 1 et 2, le calcul des métriques de branche lors de la phase d'égalisation suppose une phase préalable d'initialisation à l'aide d'une séquence pilote.

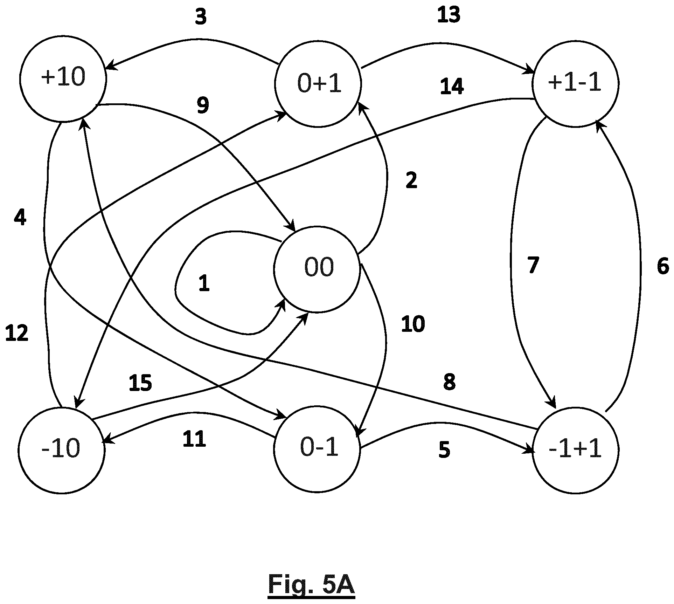

On considère à nouveau l'exemple d'une modulation de degré M = 2 et un canal présentant un étalement total de $3T_s(L=3)$. On a représenté en Fig. 5A le cheminement au sein du diagramme d'états lors de la transmission d'un exemple de séquence pilote :

$$00\ 011010111001000 \tag{18}$$

où les 2 premiers bits servent à initialiser la machine d'états.

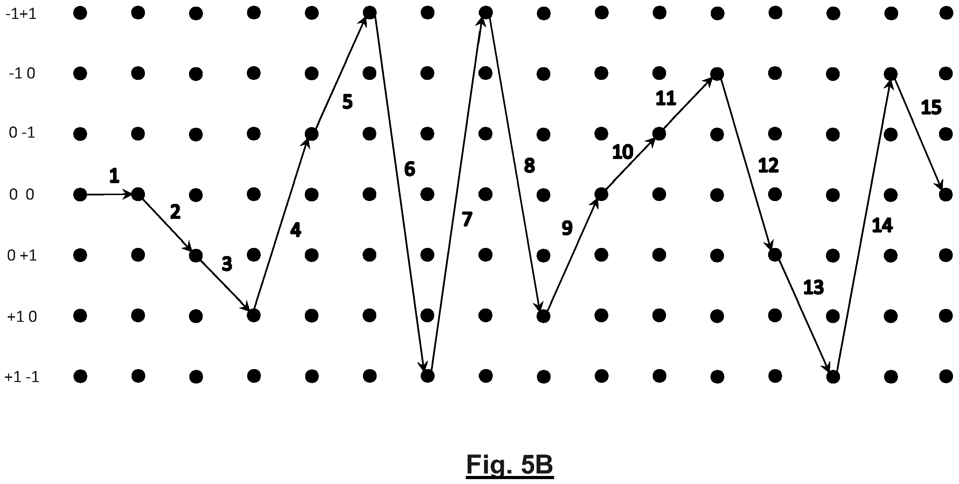

Cette séquence se traduit par un chemin à travers toutes les branches autorisées du treillis comme on peut le voir en Fig. 5B. La séquence correspondante en sortie du démodulateur différentiel est alors :

$$0,+1,0,-1,+1,-1,+1,0,0,-1,0,+1,-1,0,0 \tag{19}$$

Cette séquence pilote est d'ailleurs de longueur minimale au sens où elle passe une fois et une fois seulement par chaque branche du treillis.

De manière similaire, pour une modulation de degré $M$ = 2 et un canal présentant un étalement de $4T_s$, on pourra utiliser par exemple la séquence pilote :

$$111\ 00000100011001010011101011110000 \tag{20}$$

On peut vérifier que cette séquence se traduit par un chemin à travers toutes les (21) branches autorisées du treillis. La séquence correspondante en sortie du démodulateur différentiel est alors :

$$0,0,-1,0,0,0,0,+1,-1,0,0,+1,0,-1,0,+1,-1,+1,-1,0,+1,0,0,-1,+1,-1,+1,0,-1,+1,0,0,0,-1,0,0$$

$$\tag{21}$$

## Revendications

**1.** Méthode d'égalisation de symboles de modulation ($r_k$) transmis par un émetteur sur un canal de transmission à un récepteur (200), le récepteur fournissant des observables ($Y_k$) dépendant chacun non linéairement d'un nombre prédéterminé $L$ de symboles de modulation consécutifs, ladite méthode déterminant à partir d'une séquence d'observables la séquence de symboles de modulation la plus vraisemblable au moyen d'un algorithme de Viterbi opérant sur un treillis à $N$ états, chaque état représentant un état du canal de transmission, chaque branche entre deux états consécutifs du treillis étant associée à un symbole de modulation, **caractérisée en ce que** :

- on reçoit, dans une étape d'initialisation, une séquence pilote de symboles de modulation, ladite séquence pilote se traduisant par un chemin passant par toutes les branches autorisées du treillis, et l'on mémorise pour chacune de ces branches l'observable correspondant ;
- on reçoit une séquence de symboles de modulation à égaliser et l'on détermine la séquence de symboles de modulation la plus vraisemblable comme celle correspondant au chemin de plus faible métrique dans le treillis, une métrique d'un chemin étant calculée comme la somme des métriques des branches qui le constituent et une métrique de branche étant calculée comme une distance entre l'observable fourni pour le symbole de modulation à égaliser et l'observable mémorisé pour ladite branche.

**2.** Méthode d'égalisation selon la revendication 1, **caractérisée en ce que** la séquence pilote de symboles de modulation se traduit par un chemin passant une fois et une fois seulement par chaque branche autorisée du treillis.

**3.** Méthode d'égalisation selon la revendication 1 ou 2, **caractérisée en ce que** les symboles de modulation sont des symboles PSK se succédant à une fréquence symbole ($f_s$) et que les observables sont obtenus comme le produit hermitien d'échantillons consécutifs du signal reçu en bande de base, l'échantillonnage étant effectué à la fréquence symbole.

4. Méthode d'égalisation selon la revendication 3, **caractérisée en ce que** les symboles de modulation PSK sont de

$$\Phi_\mu = \mu \frac{\Phi}{2^m}$$

la forme $e^{j\Phi}{}_\mu$ avec où $\mu$ est un entier relatif non nul tel que $-2^{m-1} \leq \mu \leq 2^{m-1}$ où $M = 2^m$ est le degré de modulation des symboles PSK.

5. Méthode d'égalisation selon la revendication 4, **caractérisée en ce que** $m=1$ et que l'étalement temporel du canal de transmission est de $L^*T_s$ où $L^*$ est un entier supérieur ou égal à 1, et que le treillis comporte $2^L$-1 états avec $2^{L+1}$-1 branches autorisées, où $L=L^*+1$.

6. Récepteur d'un signal transmis par un émetteur sur un canal de transmission, le signal étant modulé par des symboles de modulation à une fréquence symbole ($f_s$), le récepteur comportant :

un démodulateur (210) fournissant des observables ($y_k$) à la fréquence symbole, chaque observable dépendant chacun non linéairement d'un nombre prédéterminé $L$ de symboles de modulation consécutifs ;
un égaliseur de Viterbi opérant sur un treillis à $N$ états, chaque état représentant un état du canal de transmission, chaque branche entre deux états consécutifs du treillis étant associée à un symbole de modulation, ledit égaliseur comprenant un module de calcul de métrique de branche (220) recevant lesdits observables, un module de calcul de métrique et de sélection de chemin (230) à partir desdites métriques de branche, et un module de cheminement arrière dans le treillis (240) pour déterminer un chemin survivant, le récepteur étant **caractérisé en ce qu'**il comprend en outre :

un module d'apprentissage (225) adapté à identifier une séquence pilote de symboles de modulation, ladite séquence pilote se traduisant par un chemin passant par toutes les branches autorisées du treillis, à stocker dans une mémoire, pour chacune de ces branches, l'observable correspondant ;
le module de calcul de métrique de branche (220) calculant la métrique d'une branche comme une distance entre l'observable fourni par le démodulateur et l'observable mémorisé pour ladite branche.

7. Récepteur selon la revendication 6, **caractérisé en ce que** la séquence pilote de symboles de modulation se traduit par un chemin passant une fois et une fois seulement par chaque branche autorisée du treillis.

8. Récepteur selon la revendication 6 ou 7, **caractérisé en ce que** les symboles de modulation sont des symboles PSK et que le démodulateur est un démodulateur de phase différentiel effectuant le produit hermitien d'échantillons consécutifs du signal reçu en bande de base, l'échantillonnage étant effectué à la fréquence symbole.

9. Récepteur selon la revendication 8, **caractérisé en ce que** les symboles de modulation PSK sont de la forme $e^{j\Phi}{}_\mu$

$$\Phi_\mu = \mu \frac{\Phi}{2^m}$$

avec où $\mu$ est un entier relatif non nul tel que $-2^{m-1} \leq \mu \leq 2^{m-1}$ où $M = 2^m$ est le degré de modulation des symboles PSK.

10. Récepteur selon la revendication 9, **caractérisé en ce que** $m=1$ et que l'étalement temporel du canal de transmission est de $L^*T_s$ où $L^*$ est un entier supérieur ou égal à 1, et que le treillis comporte $2^L$-1 états avec $2^{L+1}$-1 branches autorisées, où $L=L^*+1$.

**Patentansprüche**

1. Verfahren zur Entzerrung von Modulationssymbolen ($r_k$), die durch einen Sender auf einem Übertragungskanal an einen Empfänger (200) übertragen werden, wobei der Empfänger Observable ($y_k$) liefert, die jeweils nicht linear von einer vorbestimmten Zahl $L$ von aufeinanderfolgenden Modulationssymbolen abhängen, wobei das Verfahren ausgehend von einer Sequenz von Observablen die wahrscheinlichste Sequenz von Modulationssymbolen mit Hilfe eines Viterbi-Algorithmus bestimmt, der auf einem Gitter mit $N$ Zuständen operiert, wobei jeder Zustand einen Zustand des Übertragungskanals repräsentiert, wobei jeder Zweig zwischen zwei aufeinanderfolgenden Zuständen des Gitters einem Modulationssymbol zugeordnet ist, **dadurch gekennzeichnet, dass**:

- man in einem Initialisierungsschritt eine Pilotsequenz von Modulationssymbolen empfängt, wobei sich die Pilotsequenz durch einen Pfad ausdrückt, der durch alle autorisierten Zweige des Gitters verläuft, und man für jeden dieser Zweige die entsprechende Observable speichert;
- man eine zu entzerrende Sequenz von Modulationssymbolen empfängt, und man die wahrscheinlichste Sequenz von Modulationssymbolen als diejenige bestimmt, die dem Pfad mit der kleinsten Metrik in dem Gitter entspricht, wobei eine Metrik eines Pfads berechnet wird als die Summe der Metriken der Zweige, die ihn bilden, und wobei eine Metrik eines Zweigs berechnet wird als ein Abstand zwischen der Observablen, die für das zu entzerrende Modulationssymbol geliefert wird, und der für den Zweig gespeicherten Observablen.

2. Verfahren zur Entzerrung nach Anspruch 1, **dadurch gekennzeichnet, dass** die Pilotsequenz von Modulationssymbolen sich in einem Pfad ausdrückt, der einmal und nur einmal durch jeden autorisierten Zweig des Gitters verläuft.

3. Verfahren zur Entzerrung nach Anspruch 1 oder 2, **dadurch gekennzeichnet, dass** die Modulationssymbole PSK-Symbole sind, die mit einer Symbolfrequenz ($f_s$) aufeinanderfolgen, und dass die Observablen erhalten werden als das hermitische Produkt von aufeinanderfolgenden Abtastwerten des empfangenen Signals im Basisband, wobei die Abtastung mit der Symbolfrequenz durchgeführt wird.

4. Verfahren zur Entzerrung nach Anspruch 3, **dadurch gekennzeichnet, dass** die Modulationssymbole PSK die

$$\Phi_\mu = \mu \frac{\Phi}{2^m},$$

Form $e^{j\Phi_\mu}$ haben, mit wobei $\mu$ eine ganze Zahl ungleich Null derart ist, dass $-2^{m-1} \leq \mu \leq 2^{m-1}$, wobei $M=2^m$ der Modulationsgrad der PSK-Symbole ist.

5. Verfahren zur Entzerrung nach Anspruch 4, **dadurch gekennzeichnet, dass** m= 1, und dass die zeitliche Spreizung des Übertragungskanals $L^* T_s$ ist, wobei $L^*$ eine ganze Zahl größer oder gleich 1 ist, und dass das Gitter $2^L$-1 Zustände umfasst, mit $2^{L+1}$-1 autorisierten Zweigen, wobei $L = L^*+1$.

6. Empfänger für ein Signal, das durch einen Sender auf einem Übertragungskanal übertragen ist, wobei das Signal durch Modulationssymbole mit einer Symbolfrequenz ($f_s$) moduliert ist, wobei der Empfänger umfasst:

einen Demodulator (210), der Observable ($y_k$) mit der Symbolfrequenz liefert, wobei jede Observable jeweils nicht linear von einer vorbestimmten Zahl $L$ von aufeinanderfolgenden Modulationssymbolen abhängt;
einen Viterbi-Entzerrer, der auf einem Gitter mit $N$ Zuständen operiert, wobei jeder Zustand einen Zustand des Übertragungskanals repräsentiert, wobei jeder Zweig zwischen zwei aufeinander folgenden Zuständen des Gitters einem Modulationssymbol zugeordnet ist, wobei der Entzerrer ein Modul zur Berechnung einer Metrik eines Zweigs (220) umfasst, das die Observablen empfängt, ein Modul zur Berechnung der Metrik und zur Auswahl des Pfads (230) ausgehend von den Zweigmetriken, sowie ein hinteres Pfadbildungsmodul in dem Gitter (240) zur Bestimmung eines überlebenden Pfads, wobei der Empfänger **dadurch gekennzeichnet ist, dass** er ferner umfasst:

ein Lehrmodul (225), das dazu ausgelegt ist, eine Pilotsequenz von Modulationssymbolen zu identifizieren, wobei sich die Pilotsequenz durch einen Pfad ausdrückt, der durch alle autorisierten Zweige des Gitters verläuft, und in einem Speicher für jeden dieser Zweige die entsprechende Observable zu speichern;
wobei das Modul zur Berechnung der Zweigmetrik (220) die Metrik eines Zweigs als einen Abstand zwischen der durch den Demodulator gelieferten Observablen und der für den Zweig gespeicherten Observablen berechnet.

7. Empfänger nach Anspruch 6, **dadurch gekennzeichnet, dass** die Pilotsequenz von Modulationssymbolen sich durch einen Pfad ausdrückt, der einmal und nur einmal durch jeden autorisierten Zweig des Gitters verläuft.

8. Empfänger nach Anspruch 6 oder 7, **dadurch gekennzeichnet, dass** die Modulationssymbole PSK-Symbole sind, und dass der Demodulator ein differentieller Phasendemodulator ist, der das hermitische Produkt von aufeinanderfolgenden Abtastwerten des empfangenen Signals im Basisband bildet, wobei die Abtastung mit der Symbolfrequenz durchgeführt wird.

9. Empfänger nach Anspruch 8, **dadurch gekennzeichnet, dass** die Modulationssymbole PSK die Form $e^{j\Phi}{}_\mu$ haben,

$$\Phi_\mu = \mu \frac{\Phi}{2^m},$$

mit wobei $\mu$ eine ganze Zahl ungleich Null derart ist, dass $-2^{m-1} \leq \mu \leq 2^{m-1}$, wobei $M=2^m$ der Modulationsgrad der PSK-Symbole ist.

10. Empfänger nach Anspruch 9, **dadurch gekennzeichnet, dass** $m=1$, und dass die zeitliche Spreizung des Übertragungskanals $L^*T_s$ ist, wobei $L^*$ eine ganze Zahl größer oder gleich 1 ist, und dass das Gitter $2^{L-1}$ Zustände umfasst, mit $2^{L+1}-1$ autorisierten Zweigen, wobei $L=L^*+1$.

## Claims

1. A method for equalizing modulation symbols transmitted by a transmitter on a transmission channel to a receiver, the receiver providing observables each non-linearly depending on a predetermined number $L$ of consecutive modulation symbols, said method determining from a sequence of observables the most likely sequence of modulation symbols by means of a Viterbi algorithm operating on a $N$-state lattice, each state representing a state of the transmission channel, each branch between two consecutive states of the lattice being associated with a modulation symbol, **characterised in that**:

   - in an initializing step, a pilot sequence of modulation symbols is received, said pilot sequence leading to a path passing through all the allowed branches of the lattice, and the corresponding observable is stored for each of these branches;
   - a sequence of modulation symbols to be equalized is received and the most likely sequence of modulation symbols is determined as that corresponding to the lowest metric path in the lattice, a metric of a path being calculated as the sum of the metrics of the branches which make it up and a branch metric being calculated as a distance between the observable provided for the modulation symbol to be equalized and the observable stored for said branch.

2. The equalizing method according to claim 1, **characterised in that** the pilot sequence of modulation symbols leads to a path passing once and only once through each allowed branch of the lattice.

3. The equalizing method according to claim 1 or 2, **characterised in that** the modulation symbols are PSK symbols succeeding each other at a symbol frequency ($f_s$) and that the observables are obtained as the hermitian product of consecutive samples of the signal received in baseband, the sampling being performed at the symbol frequency.

4. The equalizing method according to claim 3, **characterised in that** the PSK modulation symbols are in the form of

$$\Phi_\mu = \mu \frac{\Phi}{2^m}$$

$e^{j\Phi}{}_\mu$ with where $\mu$ is a non-zero integer such that $-2^{m-1} \leq \mu \leq 2^{m-1}$ where $M=2^m$ is the modulation degree of the PSK symbols.

5. The equalizing method according to claim 4, **characterised in that** $m=1$ and the time spreading of the transmission channel is $L^*T_s$ where $L^*$ is an integer equal to or higher than 1, and that the lattice includes $2^L-1$ states with $2^{L+1}-1$ allowed branches, where $L=L^*+1$.

6. A receiver of a signal transmitted by a transmitter on a transmission channel, the signal being modulated by modulation symbols at a symbol frequency ($f_s$), the receiver including:

   a demodulator (210) providing observables ($Y_k$) at the symbol frequency, each observable non-linearly depending on a predetermined number $L$ of consecutive modulation symbols;
   a Viterbi equalizer operating on a $N$-state lattice, each state representing a state of the transmission channel, each branch between two consecutive states of the lattice being associated with a modulation symbol, said equalizer including a branch metric calculation module (220) receiving said observables, a metric calculation and path selection module (230) from said branch metrics, and an in-lattice backtracing module (240) for de-

terming a survivor path, the receiver being **characterised in that** it further comprises:

> a learning module (225) adapted to identify a pilot sequence of modulation symbols, said pilot sequence leading to a path passing through all the allowed branches of the lattice, and to store in a memory, for each of these branches, the corresponding observable;
> the branch metric calculation module (220) calculating the metric of a branch as a distance between the observable provided by the demodulator and the observable stored for said branch.

7. The receiver according to claim 6, **characterised in that** the pilot sequence of modulation symbols leads to a path passing once and only once through each allowed branch of the lattice.

8. The receiver according to claim 6 or 7, **characterised in that** the modulation symbols are PSK symbols and that the demodulator is a differential phase demodulator carrying out the hermitian product of consecutive samples of the signal received in baseband, the sampling being performed at the symbol frequency.

9. The receiver according to claim 8, **characterised in that** the PSK modulation symbols are in the form of $e^{j\Phi_\mu}$ with

$$\Phi_\mu = \mu\frac{\Phi}{2^m}$$ where $\mu$ is a non-zero integer such that $-2^{m-1} \leq \mu \leq 2^{m-1}$ where $M=2^m$ is the modulation degree of the PSK symbols.

10. The receiver according to claim 9, **characterised in that** $m=1$ and the time spreading of the transmission channel is $L^*T_s$ where $L^*$ is an integer equal to or higherthan 1, and that the lattice includes $2^L-1$ states with $2^{L+1}-1$ allowed branches, where $L=L^*+1$.

réception de la séquence pilote
mémorisation des observables
$$y_1^0, \ldots, y_N^0$$

110

réception de la séquence de
symboles à égaliser
calcul des métriques de
branche $d_i = \left( y_k - y_{n(i)}^0 \right)^2$

120

détermination du chemin de
plus faible métrique pour
chaque état

130

cheminement arrière dans le
treillis et sélection de la portion
commune des chemins
survivants
estimation des symboles de
modulation
$$\hat{x}_1, \ldots, \hat{x}_{\omega-\delta}$$

140

## Fig. 1

**Fig. 2**

**Fig. 3A**

**Fig. 3B**

**Fig. 4A**

**Fig. 4B**

**Fig. 5A**

Fig. 5B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008055207 A2

**Littérature non-brevet citée dans la description**

- The application of the CMA blind equalization in UHF RFID systems. **B. YU et al.** Proc. of IET Conf. On Wireless, Mobile ans Sensor Networks, Décembre 2007, 326-329